# EUROPÄISCHE PATENTANMELDUNG

(11) **EP 2 584 282 A1**
(43) Veröffentlichungstag der Anmeldung: **24.04.2013**
(21) Anmeldenummer: 11008365.6
(22) Anmeldetag: 18.10.2011
(51) Int. Cl.: F24J 2/52, H01L 31/042

(54) **Profilelement für eine Indach-Solarsystemanordnung**

(71) Anmelder: VM Edelstahltechnik GmbH, 58840 Plettenberg (DE)
(72) Erfinder: Mächtle, Daniel, 58840 Plettenberg (DE)
(74) Vertreter: Jakelski & Althoff

(57) **Zusammenfassung**

Ein Profilelement 1 zur Befestigung von Photovoltaikmodulen weist wenigstens einen dem Photovoltaikmodul zuwendbaren Auflagebereich 11, eine Befestigungsnut 12 und einen Träger 13 auf. Der Träger 13 verbindet den Auflagebereich 11 mit der Befestigungsnut 12. Weiterhin weist der Träger 13 einen seitlichen federartigen Vorsprung 14 auf. Eine Indach-Solarsystemanordnung für Photovoltaikmodule in Plattenform mit Indachrahmen umfasst im Wesentlichen parallel zur Firstrichtung und parallel zur Traufrichtung verlaufende Profilelemente 1.

## Beschreibung

Die vorliegende Erfindung betrifft ein Profilelement zur Befestigung von Photovoltaikmodulen. Weiterhin betrifft die Erfindung eine Indach-Solarsystemanordnung für Photovoltaikmodule in Plattenform mit Indachrahmen, welche erfindungsgemäße Profilelemente umfasst.

### Stand der Technik

Indach-Solarsystemanordnungen sind aus dem Stand der Technik bekannt. So beschreibt beispielsweise die DE 82 12 100 U1 einen Dachstein zum einander überlappenden Bedecken geneigter Dachflächen. Der Dachstein weist die Gestalt eines Dachziegels auf. An ihm werden Solarelemente befestigt.

Auch aus der DE 10 2008 048 547 A1 geht ein Dachdeckungsmodul mit einem Modulkörper hervor, der in eine Hausdachbedeckung integrierbar ist sowie mit einer Fotovoltaikeinheit, die auf dem Modulkörper befestigt ist. Diese Modulkörper können auf Satteldächern in Ziegeldächer integriert werden.

Derartige Dachdeckungsmodule lassen sich zwar auf vorteilhafte Weise in Ziegeldächer integrieren, ihr Aufbau und ihre Herstellung ist jedoch aufwendig.

Die DE 20 2010 016 159 U1 offenbart eine Solardach- oder Solarfassaden-Konstruktion mit einer Fotovoltaikanlage mit Dachelementen aus Fasern, Zement, Beton, Ton, Metall, Kunststoff oder ähnlichen Materialien, die reihenweise zueinander versetzt und überlappend angeordnet sind. Der nicht überlappende Bereich weist Solarzellen auf, die zur Erzeugung von Strom über Kontaktmittel elektrisch miteinander verbindbar sind. Es ist eine überlappende Anordnung der Solarzellen vorgesehen, wobei die Solarzellen auf Dachelementen befestigt sind und die Dachelemente durch Sturmhaken gehalten werden. Auch in diesem Falle müssen die Solarzellen ähnlich wie bei den beiden vorgenannten Dachdeckungsmodulen auf den Dachelementen befestigt werden. Dies erfordert eine aufwendige Herstellung der Dachelemente und auch die Montage der Dachelemente auf dem Dach, beispielsweise durch Sturmhaken, gestaltet sich aufwendig.

Die DE 20 2009 005 145 U1 offenbart schließlich ein Photovoltaikmodul mit Indachrahmen als Indach-Solarsystemanordnung, bei dieser Indach-Solarsystemanordnung sind überlappende Solarmodule vorgesehen, die am Übergangsbereich durch eine Dichtung abgedichtet sind: Die Anordnung erfolgt dabei durch Befestigungsschenkel auf der Dachlattung. Dieser Aufbau weist den Nachteil auf, dass die Solarmodule an das Raster der Dachlattung angepasst werden müssen.

Der Erfindung liegt nun die Aufgabe zugrunde, eine gattungsgemäße Indach-Solarsystemanordnung dahingehend weiterzubilden, dass eine großflächige Indachanordnung der Solarmodule auf unterschiedlichen Dächern, insbesondere Satteldächern, auf einfache Weise und insbesondere ohne dass eine Anpassung der Solarmodule an die Dachkonstruktion erforderlich ist, ermöglicht wird.

### Offenbarung der Erfindung

Diese Aufgabe wird erfindungsgemäß durch ein Profilelement zur Befestigung von Photovoltaikmodulen gelöst, welches wenigstens einen einem Photovoltaikmodul zuwendbaren Auflagebereich, eine Befestigungsnut und einen Träger aufweist. Die Befestigungsnut ermöglicht es, das Profilelement an einem Befestigungsprofil zu befestigen. Der Träger verbindet den Auflagebereich mit der Befestigungsnut. Weiterhin weist der Träger einen seitlichen federartigen Vorsprung auf. Der seitliche federartige Vorsprung ermöglicht es, das Profilelement mit einem zweiten identischen Profilelement zu verbinden, welches gegenüber dem ersten Profilelement um 180° gedreht ist, oder es mit einem Indachrahmen zu verbinden.

Es ist erfindungsgemäß bevorzugt, dass der Träger einen geschwungenen Bereich zwischen dem seitlichen federartigen Vorsprung und der Befestigungsnut aufweist. Besonders bevorzugt ist auf der von dem federartigen Vorsprung abgewandten Seite des Trägers zwischen dem geschwungenen Bereich und der Befestigungsnut eine Verbindungsnut angebracht. Dies ermöglicht es, das Profilelement mit einem zweiten identischen Profilelement zu verbinden, welches gegenüber dem ersten Profilelement um 90° abgewinkelt ist. Hierzu ist es bevorzugt, dass das Profilelement an mindestens einem seiner Enden auf Gehrung geschnitten ist.

Unter Verwendung der erfindungsgemäßen Profilelemente ist es möglich, eine Indach-Solarsystemanordnung für Photovoltaikmodule in Plattenform mit Indachrahmen herzustellen, welche eine großflächige Indachanordnung der Solarmodule auf unterschiedlichen Dächern ermöglicht, ohne dass eine Anpassung der Solarmodule an die Dachkonstruktion erforderlich ist. Hierzu werden erfindungsgemäß Profilelemente in der Indach-Solarsystemanordnung im Wesentlichen parallel zur Firstrichtung und parallel zur Traufrichtung des Daches angeordnet. Die erfindungsgemäßen Profilelemente ermöglichen es, Photovoltaikmodule nicht etwa in dachziegelartig überlappender Weise, sondern vielmehr in derselben Ebene anzuordnen. Dies führt zu einer besonders einfachen platzsparenden Aufbau der Indach-Solarsystemanordnung. In der Indach-Solarsystemanordnung kann ein Paar von Profilelementen, in dem das erste Profilelement gegenüber dem zweiten . Profilelement um 180° gedreht ist, durch einen im Wesentlichen H-förmigen Modulverbinder miteinander verbunden werden. Hierbei greift der federartige Vorsprung jedes der beiden miteinander verbundenen Profilelemente in den H-förmigen Modulverbinder ein. Bevorzugt ist zwischen dem H-förmigen Modulverbinder und jedem der federartigen Vorsprünge jeweils ein Abdichtelement angeordnet. Dies verhindert, dass Regenwasser zwischen zwei Photovoltaikmodulen hindurchsickert.

Um weiterhin zu verhindern, dass sich zwischen zwei Photovoltaikmodulen Wasser ansammelt, welches im Winter zu Eis gefrieren könnte, ist es erfindungsgemäß bevorzugt, dass zwischen den Aüflagebereichen der beiden miteinander verbundenen Profilelemente ein Strangelement angeordnet ist. Zwischen den Auflagebereichen der beiden miteinander verbundenen Profilelemente mit dem Strangelement ist insbesondere ein Abdichtelement angeordnet, welches an dem H-förmigen Modulverbinder befestigt ist.

Wenn die erfindungsgemäßen Profilelemente Verbindungsnuten aufweisen, ist es möglich, ein Paar von um 90° gegeneinander abgewinkelten Profilelementen durch einen winkelförmigen Modulverbinder miteinander zu verbinden. Hierbei greift der winkelförmige Modulverbinder in die Verbindungsnuten der beiden miteinander verbundenen Profilelemente ein. Während es erfindungsgemäß möglich ist, beispielsweise vier in einer 2 x 2 Anordnung positionierte Photovoltaikmodule nur mit H-förmigen Modulverbindern miteinander zu verbinden, verleiht die zusätzliche Verwendung von winkelförmigen Modulverbindern der Indach-Solarsystemanordnung zusätzliche Stabilität.

In jeder 2 x 2 Anordnung von Photovoltaikmodulen befindet sich an dem Punkt, an dem die vier Photovoltaikmodule zusammentreffen ein Zwischenraum, welcher nicht von den Strangelementen ausgefüllt werden kann. Um zu verhindern, dass sich in diesem Bereich Wasser ansammelt, welches im Winter zu Eis gefrieren könnte, ist es erfindungsgemäß bevorzugt, dass zwischen vier Strangelementen von jeweils acht miteinander verbundenen Profilelementen ein kreuzförmiges Element angeordnet ist. Dieses Element verschließt den Zwischenraum.

Ein erfindungsgemäß zur Herstellung der Profilelemente, der Strangelemente und der kreuzförmigen Elemente besonders gut geeignetes Material ist Aluminium. Die Abdichtelemente bestehen bevorzugt aus einem elastischen abdichtenden Material, beispielsweise aus Gummi oder einem Elastomer.

### Kurze Beschreibung der Zeichnungen

Ein Ausführungsbeispiel der Erfindung ist in den Zeichnungen dargestellt und in der nachfolgenden Beschreibung näher erläutert.
- Fig. 1: zeigt den Querschnitt eines Profilelements gemäß einer Ausführungsform der Erfindung.
- Fig. 2: zeigt schematisch eine von der Erfindung Gebrauch machende Indach-Solarsystemanordnung, die auf einem Dach angeordnet ist.
- Fig. 3: zeigt eine isometrische Ansicht der Indach-Solarsystemanordnung gemäß Fig. 2.
- Fig. 4: zeigt eine Seitenansicht der Ausführungsform der Indach-Solarsystemanordnung gemäß Fig. 3.
- Fig. 5: zeigt einen Detailausschnitt aus Fig. 4.
- Fig. 6: zeigt eine andere Seitenansicht der Indach-Solarsystemanordnung gemäß Fig. 3.
- Fig. 7: zeigt einen Detailausschnitt aus Fig. 6.
- Fig. 8: zeigt die Verbindung von zwei Profilelementen gemäß Fig. 1 in der Indach-Solarsystemanordnung gemäß Fig. 2 mit einem H-förmigen Modulverbinder.
- Fig. 9: zeigt einen weiteren Detailausschnitt aus Fig. 6.
- Fig. 10: ist eine teilweise aufgeschnittene isometrische Darstellung der Indach-Solarsystemanordnung aus Fig. 3, in welcher zusätzlich ein Indach-Rahmen abgebildet ist.
- Fig. 11: ist ein Detailausschnitt aus Fig. 10.
- Fig. 12: zeigt einen weiteren Detailausschnitt aus Fig. 10.
- Fig. 13: zeigt die Verbindung von zwei um 90° zueinander abgewinkelten Profilelementen gemäß Fig. 1 mit einem winkelförmigen Modulverbinder.
- Fig. 14: zeigt den winkelförmigen Modulverbinder aus Fig. 13.

### Ausführungsbeispiele der Erfindung

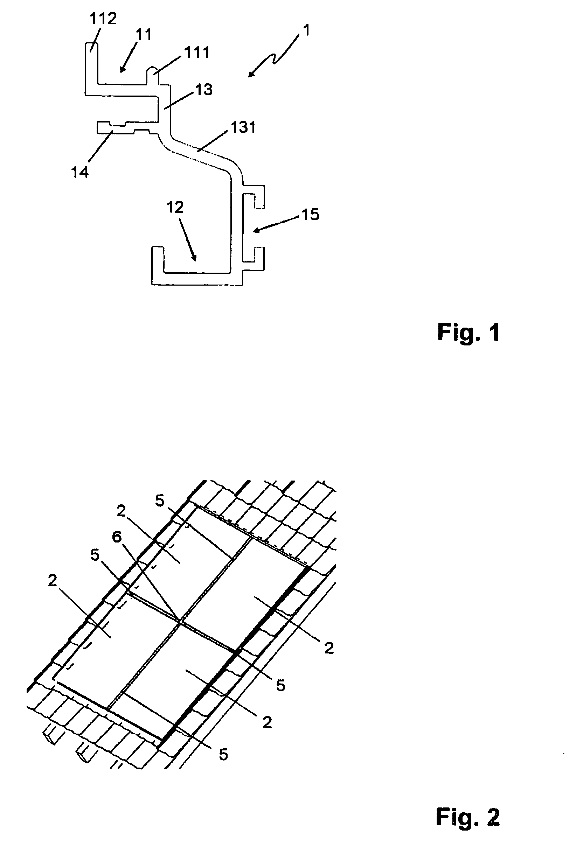

Fig. 1 zeigt den Querschnitt eines Profilelements 1 gemäß einer Ausführungsform der Erfindung, welches aus Aluminium bestehen kann. Ein Auflagebereich 11 für ein Photovoltaikmodul ist als U-förmige Nut ausgebildet. Der einem aufzulegenden Photovoltaikmodul zugewandte U-Schenkel 111 weist dabei eine geringere Höhe auf als der dem Photovoltaikmodul abgewandte äußere U-förmige Schenkel 112. Der U-förmige Schenkel geringerer Höhe 111, der an seiner Oberseite bevorzugt abgerundet ist, bildet eine Auflagefläche für das Photovoltaikmodul. Der dem Photovoltaikmodul abgewandte äußere U-förmige Schenkel 112 weist eine Höhe auf, die der Höhe des der dem Photovoltaikmodul zugewandten U-förmigen Schenkels 111 zuzüglich der Dicke des Photovoltaikmoduls entspricht. Auf diese Weise schließt ein auf den Auflagebereich 11 aufgelegtes Photovoltaikmodul bündig mit der Oberseite des äußeren U-förmigen Schenkels 112 ab, wobei zwischen dem U-förmigen Schenkel 112 und dem Photovoltaikmodul ein Spalt geringerer . _ Breite vorgesehen ist. Dieser Spalt dient dem Ausgleich unterschiedlicher Längenausdehnung aufgrund von Temperatureinflüssen zwischen dem Photovoltaikmodul und dem Profilelement 1.

Der Auflagebereich 11 ist über einen Träger 13 mit einer U-förmigen Befestigungsnut 12 verbunden. Der Träger weist einen geschwungenen Bereich 131 auf. Zwischen dem geschwungenen Bereich 131 und dem Auflagebereich 11 ist am Träger 13 ein federartiger Vorsprung 14 angeordnet, welcher in Richtung des längeren U-Schenkels 112 des Auflagebereichs 11 weist. Auf der von dem federartigen Vorsprung 14 abgewandten Seite des Trägers 13 ist zwischen dem geschwungenen Bereich 131 und der Befestigungsnut 12 eine Verbindungsnut 15 ausgebildet. Der geschwungene Bereich 131 des Trägers 13 ist so geformt, dass der Abstand zwischen dem Auflagebereich 11 und der Verbindungsnut 15 im Vergleich zu einer linearen Ausgestaltung des Trägers 13 vergrößert ist.

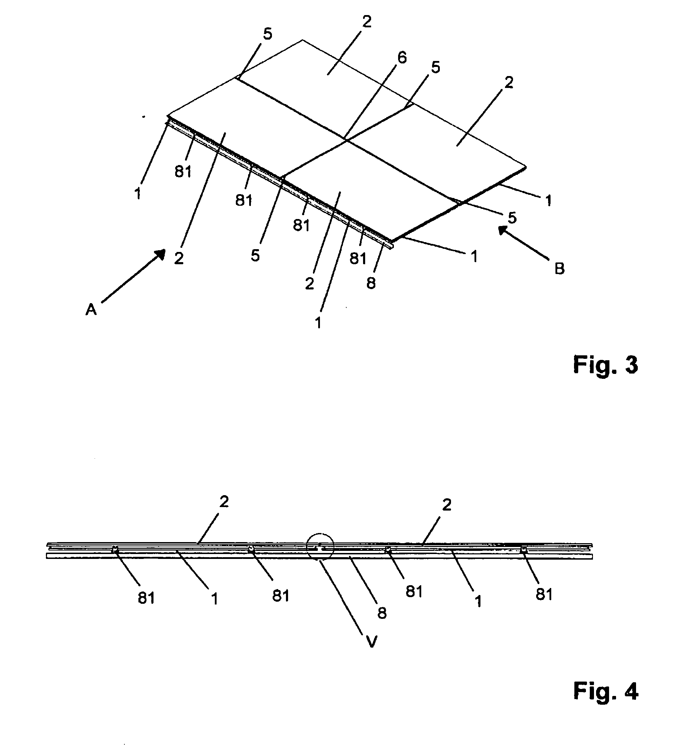

Fig. 2 zeigt eine Ausführungsform der erfindungsgemäßen Indach-Solarsystemanordnung, welche auf einem Dach angeordnet ist. Sie besteht aus 2 x 2 miteinander verbundenen Photovoltaikmodulen 2 in Plattenform, welche zusammen eine ebene Fläche bilden. Allerdings ist es erfindungsgemäß auch möglich, Indach-Solarsystemanordnungen mit einer anderen Anzahl oder Anordnung von Photovoltaikmodulen bereitzustellen. Eine isometrische Ansicht der Indach-Solarsystemanordnung ist in Fig. 3 dargestellt. Profilelemente 1 sind parallel zum firstseitigen Rand und parallel zum traufseitigen Rand der Indach-Solarsystemanordnung angeordnet. Die Profilelemente 1 am traufseitigen Rand der Indach-Solarsystemanordnung sind mittels Befestigungselementen 81 an einer Befestigungsschiene 8 montiert. Die Befestigungsschiene 8 dient der Verbindung der Indach-Solarsystemanordnung mit dem Dach.

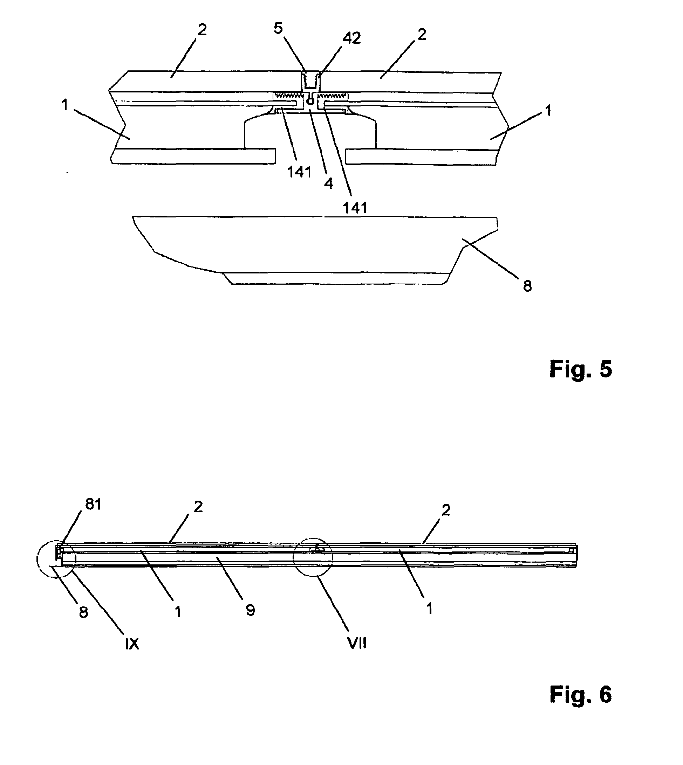

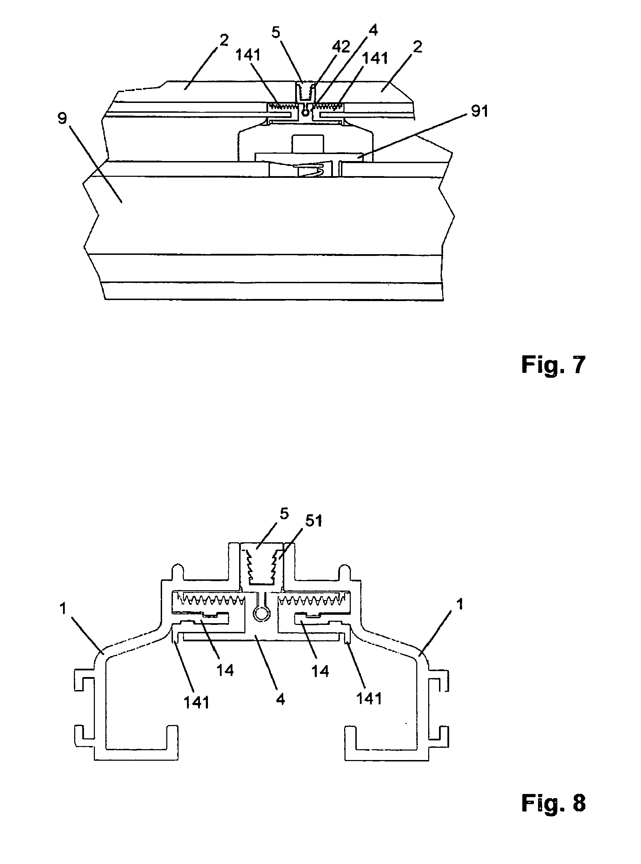

Fig. 4 zeigt eine Seitenansicht der Indach-Solarsystemanordnung aus der traufseitigen Blickrichtung, welche in Fig. 3 mit A bezeichnet ist. Ein Detailausschnitt aus Fig. 4 ist in Fig. 5 dargestellt (in Fig. 4 mit V bezeichnet). Weiterhin zeigt Fig. 6 eine Seitenansicht der Indach-Solarsystemanordnung aus der firstseitigen Blickrichtung, welche in Fig. 3 mit B bezeichnet ist. Ein Detailausschnitt aus Fig. 6 ist in Fig. 7 dargestellt (in Fig. 6 mit VII bezeichnet). Die Fig. 5 und 7 zeigen jeweils, wie zwei zueinander um 180° gedrehte erfindungsgemäße Profilelemente miteinander verbunden sind. Diese Verbindung erfolgt in firstseitiger Richtung und in traufseitiger Richtung in derselben Weise. Eine Querschnittsansicht dieser Verbindungen ist in Fig. 8 dargestellt. Ein im Wesentlichen H-förmiger Modulverbinder 4, der aus Aluminium bestehen kann, ist so zwischen den beiden Profilelementen 1 angeordnet, dass die federartigen Vorsprünge 14 der Profilelemente 1 in den H-förmigen Modulverbinder 4 eingreifen. Zwischen dem H-förmigen Modulverbinder 4 und den federartigen Vorsprüngen 14 ist jeweils ein im Wesentlichen C-förmiges Abdichtelement 141 angeordnet, dass aus Gummi bestehen kann. Dieses verhindert, dass Regenwasser zwischen zwei Photovoltaikmodulen hindurchsickert, um am H-förmigen Modulverbinder 4 vorbei durch das Dach ins Innere eines Gebäudes zu gelangen. Ein weiteres Abdichtelement 51, welches am H-förmigen Modulverbinder 14 befestigt ist, ist zwischen den Auflagebereichen 11 der beiden Profilelemente 1 angeordnet und hat eine im Wesentlichen Y-förmige Gestalt. Es kann aus Gummi bestehen. In diesem zweiten Abdichtelement 51 ist ein Strangelement 5 eingebracht, welches aus Aluminium bestehen kann. Die Kombination aus Strangelement 5 und zweitem Abdichtelement 51 verhindert, dass sich zwischen den Profilelementen 1 Wasser ansammelt, welches im Winter zu Eis gefrieren und dadurch zu einer mechanischen Belastung der Profilelemente 1 führen könnte. In Figur 7 ist dargestellt, wie zwei mit einem H-förmigen Modulverbinder verbundene Profilelemente 1 mit einem Klemmelement 91, welches in die Befestigungsnuten 12 beider Profilelemente eingreift, an einem Befestigungsprofil 9 befestigt ist.

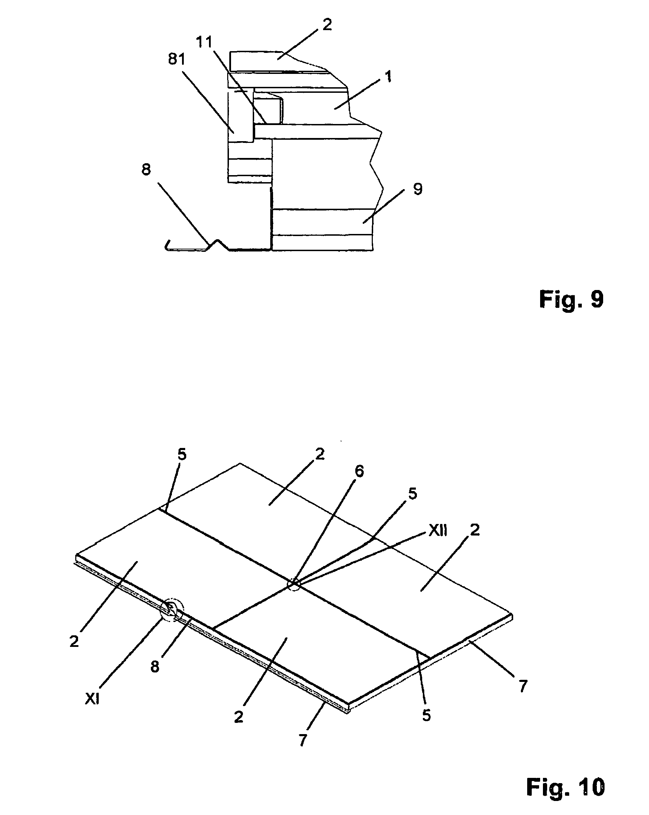

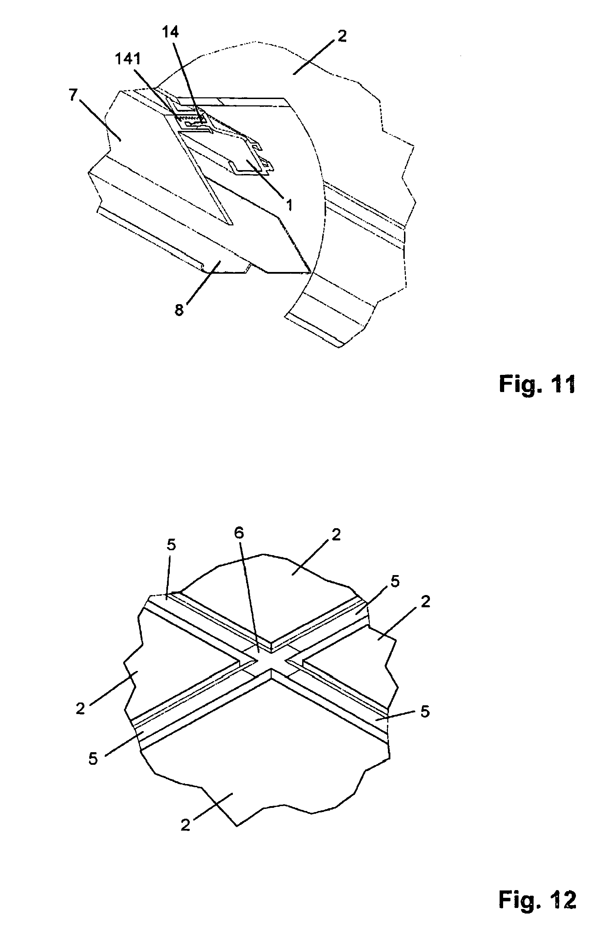

Fig. 9 zeigt einen weiteren Detailausschnitt aus Fig. 6 (in Fig. 6 mit IX bezeichnet). Hierin ist zu erkennen, wie ein Profilelement 1 mit der Befestigungsschiene 8 verbunden ist, indem ein Befestigungselement 8 in die Befestigungsnut 11 des Profilelements 1 eingreift. Fig. 10 ist eine teilweise aufgeschnittene isometrische Darstellung der Ausführungsform der erfindungsgemäßen Indach-Solarsystemanordnung gemäß Fig. 3, in welcher zusätzlich der Indach-Rahmen 7 dargestellt ist. Ein Detailausschnitt aus Fig. 10 ist in Fig. 11 dargestellt (in Fig. 10 mit XI bezeichnet). Dort ist zu erkennen, dass die am traufseitigen Rand der Indach-Solarsystemanordnung angeordneten Profilelemente 1 mit dem Indach-Rahmen 7 verbunden sind, indem ein federartiger Vorsprung 14 eines Profilelements 1 in den Rahmen 7 eingreift. Der federartige Vorsprung 14 ist von einem im Wesentlichen C-förmigen Abdichtelement 141 umgeben, welches aus Gummi bestehen kann.

Fig. 12 zeigt einen weiteren Detailausschnitt aus Fig. 10 (in Fig. 10 mit XII bezeichnet). An dem Punkt, an welchem die vier Photovoltaikmodule 2 zusammenstoßen, ist ein Bereich zu erkennen, welcher nicht von Strangelementen 5 ausgefüllt wird. In diesem Bereich ist ein kreuzförmiges Element 6 angeordnet, welches aus Aluminium bestehen kann, um diesen Bereich zu verschließen und so das Eindringen von Regenwasser zu verhindern.

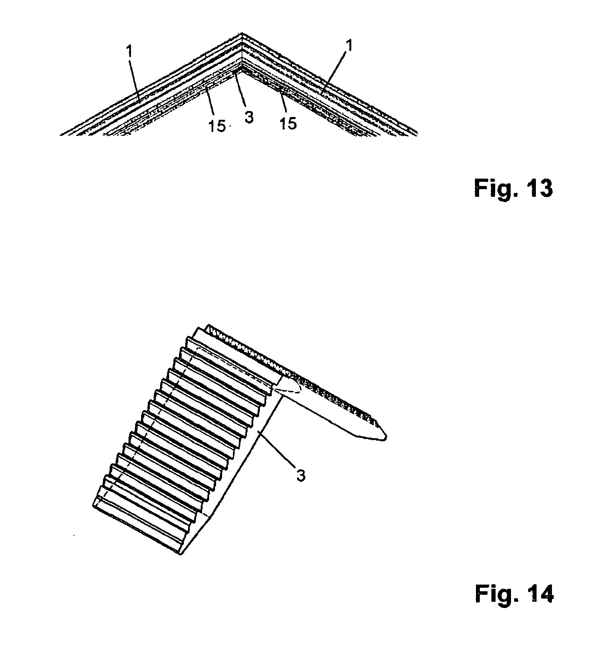

Fig. 13 zeigt, wie zwei um 90° zueinander gedrehte Profilelemente 1 miteinander verbunden sind. In den Verbindungsnuten 15 der Profilelemente 1 ist ein winkelförmiger Modulverbinder 3 angeordnet. Die beiden Profilelemente 1 sind auf Gehrung geschnitten. Der winkelförmige Modulverbinder 3 ist in Fig. 14 dargestellt. Er besteht aus zwei Schenkeln, welche einen Winkel von 90° bilden und kann aus einem elastischen Material, wie beispielsweise Gummi, bestehen.

Die erfindungsgemäße Indach-Solarsystemanordnung ermöglicht eine großflächige Indachanordnung der Solarmodule 2 auf unterschiedlichen Dächern, insbesondere Satteldächern, auf einfache Weise. Dabei ist keine Anpassung der Solarmodule 2 an die Dachkonstruktion erforderlich. Durch die Anordnung der Solarmodule 2 in einer gemeinsamen Ebene ist die erfindungsgemäße Indach-Solarsystemanordnung außerdem besonders platzsparend.

## Patentansprüche

1. Profilelement (1) zur Befestigung von Photovoltaikmodulen (2) mit wenigstens einem dem Photovoltaikmodul (2) zuwendbaren Auflagebereich (11), einer Befestigungsnut (12) und einem Träger (13), welcher den Auflagebereich (11) mit der Befestigungsnut (12) verbindet, **dadurch gekennzeichnet, dass** der Träger (13) einen seitlichen federartigen Vorsprung (14) aufweist.

2. Profilelement (1) nach Anspruch 1, **dadurch gekennzeichnet, dass** der Träger (13) einen geschwungenen Bereich (131) zwischen dem seitlichen federartigen Vorsprung (14) und der Befestigungsnut (12) aufweist.

3. Profilelement (1) nach Anspruch 2, **dadurch gekennzeichnet, dass** es auf der von dem federartigen Vorsprung (14) abgewandten Seite des Trägers (13) zwischen dem geschwungenen Bereich (131) und der Befestigungsnut (12) eine Verbindungsnut (15) aufweist.

4. Indach-Solarsystemanordnung für Photovoltaikmodule (2) in Plattenform mit Indachrahmen, umfassend im Wesentlichen parallel zur Firstrichtung und parallel zur Traufrichtung verlaufende Profilelemente (1) nach einem der Ansprüche 1 bis 3.

5. Indach-Solarsystemanordnung für Photovoltaikmodule (2) in Plattenform mit Indachrahmen, umfassend im Wesentlichen parallel zur Firstrichtung und parallel zur Traufrichtung verlaufende Profilelemente (1) gemäß Anspruch 3 **dadurch gekennzeichnet, dass** mindestens ein Paar von Profilelementen (1) durch einen winkelförmigen Modulverbinder (3) miteinander verbunden ist, wobei der winkelförmige Modulverbinder (3) in die Verbindungsnuten (15) der beiden miteinander verbundenen Profilelemente (1) eingreift.

6. Indach-Solarsystemanordnung nach Anspruch 4 oder 5, **dadurch gekennzeichnet, dass** alle Photovoltaikmodule (2) in derselben Ebene angeordnet sind.

7. lndach-Solarsystemanordnung nach einem der Ansprüche 4 bis 6, **dadurch gekennzeichnet, dass** mindestens ein Paar von Profilelementen (1) durch einen im Wesentlichen H-förmigen Modulverbinder (4) miteinander verbunden ist, wobei der federartige Vorsprung (14) jedes der beiden miteinander verbundenen Profilelemente (1) in den H-förmigen Modulverbinder (4) eingreift.

8. Indach-Solarsystemanordnung nach Anspruch 7, **dadurch gekennzeichnet, dass** zwischen den Auflagebereichen (11) der beiden miteinander verbundenen Profilelemente (1) ein Strangelement (5) angeordnet ist.

9. Indach-Solarsystemanordnung nach Anspruch 8, **dadurch gekennzeichnet, dass** zwischen den Auflagebereichen (11) der beiden miteinander verbundenen Profilelemente (11) und dem Strangelement (5) ein Abdichtelement (51) angeordnet ist, welches an dem H-förmigen Modulverbinder (14) befestigt ist.

10. Indach-Solarsystemanordnung nach Anspruch 8 oder 9, **dadurch gekennzeichnet, dass** zwischen vier Strangelementen (5) von jeweils acht miteinander verbundenen Profilelementen (1) ein kreuzförmiges Element (6) angeordnet ist.
